# EUROPEAN PATENT APPLICATION

(11) **EP 4 794 432 A1**
(43) Date of publication of application: **19.08.2026**
(21) Application number: 23955053.6
(22) Date of filing: 09.10.2023
(51) Int. Cl.: H04W 72/512

(54) **LOW LATENCY SERVICE TRANSMISSION METHOD, COMMUNICATION DEVICE AND COMMUNICATION SYSTEM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/123615
(87) International publication number: WO 2025/076664

(57) **Abstract**

Embodiments of the present disclosure relate to a low latency service transmission method, a communication device, and a communication system. The low latency service transmission method is applied to a first device, and comprises: determining a first transmission power of a first wireless frame; wherein the first wireless frame indicates that the first device sends a low latency service within a transmission opportunity (TXOP) of a second device; the first device and the second device being in an overlapping basic service set (OBSS); wherein the first transmission power is greater than a reference transmission power; the reference transmission power comprising: a second transmit power used by the second device for transmitting a non-low latency service, or a third transmit power used by the first device the previous time for transmitting the first wireless frame; the first device sending the first wireless frame using the first transmission power, so as to indicate that the low latency service will be sent within the TXOP of the second device. By means of the first transmitting power the common frequency interference problem in the ORSS is avoided so that the transmission of the low latency service is ensured.

## Description

### TECHNICAL FIELD

The present disclosure relates to the field of communication technology, and in particular to a low latency service transmission method, communication device, and communication system.

### BACKGROUND

Currently, research in Wi-Fi technology includes, for example, Ultra High Reliability (UHR), which aims to improve the reliability of Wireless Local Area Network (WLAN) connections, reduce latency, enhance manageability, increase throughput under different Signal to Noise Ratio (SNR) levels, and reduce device-level power consumption.

In UHR, the low latency service transmission is one of the research focuses. Therefore, the low latency service transmission is to be further improved.

### SUMMARY

Embodiments of the present disclosure provide a low latency service transmission method, a communication device, and a communication system to further improve the low latency service transmission.

On the one hand, embodiments of the present disclosure provide a low latency service transmission method, applied to a first device, where the method includes:
determining a first transmission power of a first frame; where the first frame indicates that the first device transmits a low latency service within a transmission opportunity (TXOP) corresponding to a second device; and the first device and the second device are in an overlapping basic service set (OBSS);
where the first transmission power is greater than a reference transmission power; and the reference transmission power includes: a second transmission power of the second device for transmitting a non-low latency service, or a third transmission power, in a last transmission of the first frame, of the first device; and
transmitting the first frame.

On the other hand, embodiments of the present disclosure further provide a low latency service transmission method, applied to a third device, where the method includes:
receiving a first frame transmitted by a first device;
where the first frame indicates that the first device transmits a low latency service within a transmission opportunity (TXOP) corresponding to a second device; and the first device and the second device are in a same overlapping basic service set (OBSS);
where a first transmission power of the first frame is greater than a reference transmission power; and the reference transmission power includes: a second transmission power of the second device for transmitting a non-low latency service, or a third transmission power, in a last transmission of the first frame, of the first device.

On the other hand, embodiments of the present disclosure further provide a communication device, where the communication device is a first device, where the first device includes:
a determining module, configured to determine a first transmission power of a first frame; where the first frame indicates that the first device transmits a low latency service within transmission opportunity (TXOP) corresponding to a second device; and the first device and the second device are in an overlapping basic service set (OBSS);
where the first transmission power is greater than a reference transmission power; and the reference transmission power includes: a second transmission power of the second device for transmitting a non-low latency service, or a third transmission power, in a last transmission of the first frame, of the first device; and
a transmitting module, configured to transmit the first frame.

On the other hand, embodiments of the present disclosure further provide a communication device, where the communication device is a third device, where the third device includes:
a first receiving module, configured to receive a first frame transmitted by a first device;
where the first frame indicates that the first device transmits a low latency service within a transmission opportunity (TXOP) corresponding to a second device; and the first device and the second device are in a same overlapping basic service set (OBSS);
where a first transmission power of the first frame is greater than a reference transmission power; and the reference transmission power includes: a second transmission power of the second device for transmitting a non-low latency service, or a third transmission power, in a last transmission of the first frame, of the first device.

On the other hand, embodiments of the present disclosure further provide a communication device, where the communication device is a first device, where the first device includes:
one or more processors;
where the first device is configured to perform the low latency service transmission method described in embodiments of the present disclosure.

On the other hand, embodiments of the present disclosure further provide a communication device, where the communication device is a third device, where the third device includes:
one or more processors;
where the third device is configured to perform the low latency service transmission method described in embodiments of the present disclosure.

Embodiments of the present disclosure also provides a communication system, where the communication system includes a first device and a third device; where the first device is configured to implement the low latency service transmission method described in embodiments of the present disclosure, and the third device is configured to implement the low latency service transmission method described in embodiments of the present disclosure.

Embodiments of the present disclosure further provides a storage medium, where the storage medium stores instructions, where when the instructions are run on a communication device, causing the communication device to perform the low latency service transmission method as described in embodiments of the present disclosure.

In embodiments of the present disclosure, a first device determines a first transmission power of a first frame; where the first transmission power is greater than a reference transmission power; the reference transmission power includes: a second transmission power of the second device for transmitting a non-low latency service, or a third transmission power, in a last transmission of the first frame, of the first device; the first device transmits a first frame with the first transmission power to indicate that it will transmit a low latency service within the TXOP corresponding to the second device; and accordingly, the first transmission power is used to avoid the co-channel interference problem in the OBSS to ensure the low latency service transmission.

Additional aspects and advantages of embodiments of the present disclosure will be partially given in the description below, which will become apparent from the description below, or will be learned through the practice of the present disclosure.

### BRIEF DESCRIPTION OF THE DRAWINGS

In order to more clearly illustrate the technical solutions in embodiments of the present disclosure, the drawings required for describing embodiments are introduced below. The following drawings are only some embodiments of the present disclosure and do not impose specific limitations on the protection scope of the present disclosure.
FIG. 1 is an exemplary schematic diagram of the architecture of a communication system provided according to embodiments of the present disclosure.
FIG. 2 is a first exemplary schematic diagram of a method provided according to embodiments of the present disclosure.
FIG. 3 is a second exemplary schematic diagram of a method provided according to embodiments of the present disclosure.
FIG. 4 is a third exemplary schematic diagram of a method provided according to embodiments of the present disclosure.
FIG. 5 is a first flow chart of a low latency service transmission method provided in embodiments of the present disclosure.
FIG. 6 is a second flow chart of a low latency service transmission method provided in embodiments of the present disclosure.
FIG. 7 is a structure schematic diagram of a first device provided in embodiments of the present disclosure.
FIG. 8 is a structure schematic diagram of a third device provided in embodiments of the present disclosure.
FIG. 9 is a structure schematic diagram of a terminal provided in embodiments of the present disclosure.
FIG. 10 is a structure schematic diagram of a chip provided in embodiments of the present disclosure.

### DETAILED DESCRIPTION

Embodiments of the present disclosure provide a low latency service transmission method, a communication device, and a communication system.

In a first aspect, embodiments of the present disclosure provide a low latency service transmission method, applied to a first device, where the method includes:
determining a first transmission power of a first frame; where the first frame indicates that the first device transmits a low latency service within a transmission opportunity (TXOP) corresponding to a second device; and the first device and the second device are in an overlapping basic service set (OBSS);
where the first transmission power is greater than a reference transmission power; and the reference transmission power includes: a second transmission power of the second device for transmitting a non-low latency service, or a third transmission power, in a last transmission of the first frame, of the first device; and
transmitting the first frame.

In the foregoing embodiment, the first device determines the first transmission power of the first frame; where the first transmission power is greater than the reference transmission power; the reference transmission power includes: the second transmission power of the second device for transmitting non-low latency services, or the third transmission power, in a last transmission of the first frame, of the first device; the first device transmits the first frame with the first transmission power to indicate that it will transmit a low latency service within the TXOP corresponding to the second device; and accordingly, the first transmission power is used to avoid the co-channel interference problem in the OBSS to ensure the low latency service transmission.

In combination with some embodiments of the first aspect, in some embodiments, determining the first transmission power of the first frame includes:
receiving a physical layer protocol data unit (PPDU) transmitted by the second device, and determining a second transmission power of the second device for transmitting the PPDU; and
obtaining the first transmission power of the first frame by increasing the second transmission power by a first preset power value.

In the foregoing embodiment, the first transmission power of the first frame is obtained by increasing the second transmission power by the first preset power value, thereby avoiding the co-channel interference problem in the OBSS.

In combination with some embodiments of the first aspect, in some embodiments, receiving the PPDU transmitted by the second device includes:
parsing the PPDU transmitted by the second device; and
determining, according to a BSS color identifier of the PPDU, that the PPDU is a data frame transmitted by an OBSS of the first device; and/or determining, according to a target identifier bit of the PPDU, that the PPDU is a data frame of a low latency service.

In the foregoing embodiment, the OBSS PPDU is identified by the BSS color identifier, and the service transmitted by the second device is identified as a non-low latency service by the target identifier bit.

In combination with some embodiments of the first aspect, in some embodiments, before determining the first transmission power of the first frame, the method includes:
transmitting the first frame with the third transmission power; and
failing to receive a second wireless frame fed back by a receiving end, or receiving a second wireless frame fed back by the receiving end with a fourth transmission power greater than the third transmission power.

In the foregoing embodiment, when the first device is unable to detect the non-low latency service transmission of the second device, the first frame is transmitted with the third transmission power. Based on whether the receiving end feeds back the second wireless frame and the transmission power of the second wireless frame, it is determined whether there is a hidden node, and then whether to adjust the transmission power.

In combination with some embodiments of the first aspect, in some embodiments, after transmitting the first frame, the method includes:
transmitting the low latency service with the first transmission power.

In the foregoing embodiment, the first device transmits data frames of the low latency service with the first transmission power, and avoids the co-channel interference problem in the OBSS by using the first transmission power, thereby ensuring the low latency service transmission.

In combination with some embodiments of the first aspect, in some embodiments, before transmitting the first frame, the method includes:
updating a network allocation vector (NAV) of the first device to an idle state.

In the foregoing embodiment, before the first device transmits the first frame, its NAV is updated to an idle state, so that the first device can access the channel to transmit the first frame.

In combination with some embodiments of the first aspect, in some embodiments, after determining the first transmission power of the first frame, the method includes:
broadcasting, by the access point device, a third wireless frame, where the third wireless frame carries the first transmission power, where the first device includes an access point device.

In the foregoing embodiment, when the access point device broadcasts in the third wireless frame that it is in the OBSS TXOP, it is to transmit the transmission power value of the low latency service, so that other devices in the OBSS can avoid the first transmission power when working.

In combination with some embodiments of the first aspect, in some embodiments, the first frame includes a request to send (RTS) frame or a low latency indication (LLI) frame.

In a second aspect, embodiments of the present disclosure provide a low latency service transmission method, applied to a third device, where the method includes:
receiving a first frame transmitted by a first device;
where the first frame indicates that the first device transmits a low latency service within a transmission opportunity (TXOP) corresponding to a second device; and the first device and the second device are in a same overlapping basic service set (OBSS);
where a first transmission power of the first frame is greater than a reference transmission power; and the reference transmission power includes: a second transmission power of the second device for transmitting a non-low latency service, or a third transmission power, in a last transmission of the first frame, of the first device.

In combination with some embodiments of the second aspect, in some embodiments, before receiving a first frame transmitted by a first device, the method includes:
receiving the first frame transmitted by the first device with the third transmission power; and
transmitting a second wireless frame to the first device with a fourth transmission power; where the fourth transmission power is greater than the third transmission power.

In combination with some embodiments of the second aspect, in some embodiments, after receiving the first frame transmitted by the first device, the method includes:
receiving the low latency service transmitted by the first device with the first transmission power.

In combination with some embodiments of the second aspect, in some embodiments, the first frame includes a request to send (RTS) frame or a low latency indication (LLI) frame.

In a third aspect, embodiments of the present disclosure further provide a communication device, which is a first device, and the first device includes at least one of a determining module and a transmitting module; where the first device is configured to perform an optional implementation of the first aspect.

In a fourth aspect, embodiments of the present disclosure further provide a communication device, which is a third device and includes: a first receiving module; where the third device is configured to perform the optional implementation of the second aspect.

In a fifth aspect, embodiments of the present disclosure further provide a communication device, where the communication device is a first device, including:
one or more processors;
where the first device is configured to perform an optional implementation of the first aspect.

In a sixth aspect, embodiments of the present disclosure further provide a communication device, where the communication device is a third device, including:
one or more processors;
where the third device is configured to perform the optional implementation of the second aspect.

In the seventh aspect, embodiments of the present disclosure further provide a communication system, including a first device and a third device; where the first device is configured to perform the optional implementation as described in the first aspect, and the third device is configured to perform the optional implementation as described in the second aspect.

In an eighth aspect, embodiments of the present disclosure further provide a storage medium storing instructions, where when the instructions are run on a communication device, causing the communication device to perform the optional implementation described in the first and second aspects.

In a ninth aspect, embodiments of the present disclosure provide a program product. When the program product is executed by a communication device, the communication device performs the optional implementation described in the first aspect and the second aspect.

In a tenth aspect, embodiments of the present disclosure provide a computer program, where when the computer program is run on a computer, causing the computer to perform the optional implementation described in the first aspect and the second aspect.

In an eleventh aspect, embodiments of the present disclosure provide a chip or a chip system, which includes a processing circuit configured to perform the optional implementation described in the first aspect and the second aspect.

It is understandable that the first device, the third device, the communication system, the storage medium, the program product, the computer program, the chip or the chip system are all used to perform the method provided in embodiments of the present disclosure. Therefore, the beneficial effects that can be achieved can refer to the beneficial effects in the corresponding method, which will not be repeated here.

Embodiments of the present disclosure provide a low latency service transmission method, a communication device, and a communication system. In some embodiments, the terms such as low latency service transmission method, signal transmission method, wireless frame transmission method, and the like can be replaced with each other, and the terms such as information processing system, communication system, and the like can be replaced with each other.

Embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, embodiments can be arbitrarily combined, for example, some or all of the steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between embodiments are consistent and can be referenced to each other, and the technical features in different embodiments can be combined to form a new embodiment based on their internal logical relationships.

The terms used in embodiments of the present disclosure are only for the purpose of describing specific embodiments and are not intended to limit the present disclosure.

In embodiments of the present disclosure, "plurality" or "multiple" refers to two or more.

In some embodiments, the terms "at least one," "one or more," "a plurality of," "multiple," and the like may be used interchangeably.

In some embodiments, "at least one of A and B", "A and/or B", "A, in one case, B, in another case", "in response to one case, A, in response to another case, B", and the like may include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, and the like, it is also similar with the above.

In some embodiments, the recording method of "A or B" may include the following technical solutions according to the situation: in some embodiments, A (A is executed independently of B); in some embodiments, B (B is executed independently of A); in some embodiments, execution is selected from A and B (A and B are selectively executed). When there are more branches such as A, B, C, and the like, it is also similar with the above.

The prefixes such as "first" and "second" in embodiments of the present disclosure are only used to distinguish different description objects, and do not constitute restrictions on the position, order, priority, quantity or content of the description objects. The statement of the description object should refer to the description in the context of the claims or embodiments, and should not constitute unnecessary restrictions due to the use of prefixes. For example, if the description object is a "field", the ordinal number before the "field" in the "first field" and the "second field" does not limit the position or order between the "fields", and the "first" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number, and can be one or more. Taking the "first device" as an example, the number of "devices" can be one or more. In addition, the objects modified by different prefixes may be the same or different. For example, if the description object is "device", then the "first device" and the "second device" may be the same device or different devices, and their types may be the same or different. For another example, if the description object is "information", then the "first information" and the "second information" may be the same information or different information, and their contents may be the same or different.

In some embodiments, "including A", "including A", "used to indicate A", and "carrying A" can be interpreted as directly carrying A or indirectly indicating A.

In some embodiments, terms such as "in response to ...", "in response to determining ...", "in the case of ...", "at the time of ...", "when ...", "if ...", and the like can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, apparatus and device may be interpreted as physical or virtual, and their names are not limited to the names recorded in embodiments. In some cases, they may also be understood as "equipment", "device", "circuit", "network element", "node", "function", "unit", "section", "system", "network", "chip", "chip system", "entity", "subject", and the like.

In some embodiments, acquisition of data, information, and the like may comply with the laws and regulations of the country where the data is obtained.

In some embodiments, data, information, and the like may be obtained with the user's consent.

In addition, each element, each row, or each column in the table of embodiments of the present disclosure may be implemented as an independent embodiment, and the combination of any elements, any rows, and any columns may also be implemented as an independent embodiment.

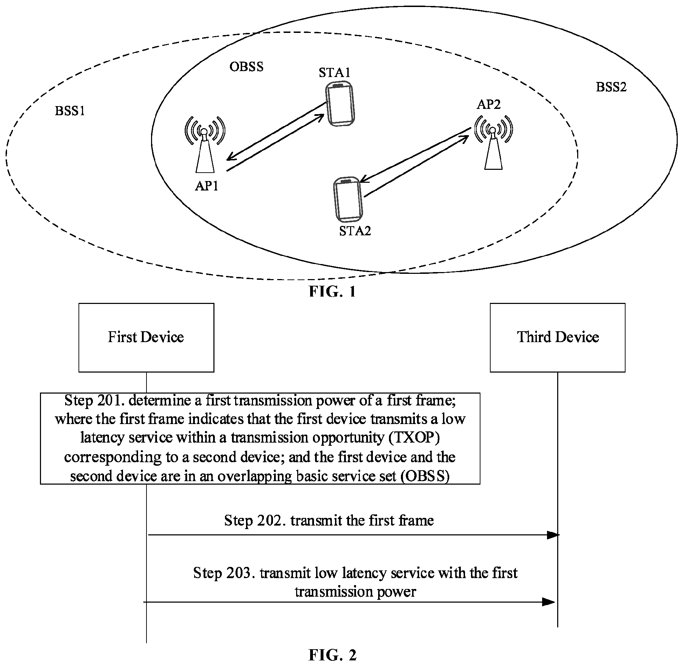

FIG. 1 is a schematic diagram of the architecture of a communication system according to embodiments of the present disclosure.

The communication system shown in embodiments of the present disclosure includes a first device, a second device and a third device; as shown in FIG. 1, the first device, the second device and the third device may be a station device (Station, STA) and an access point device (Access Point, AP), respectively. For example, the first device may be AP1 or STA1 in FIG. 1, the second device may be AP2 or STA2 in FIG. 1, and the third device may be AP1 or STA1 in FIG. 1.

In some embodiments, the station device includes, for example, a wireless communication chip, a wireless sensor, or a wireless communication terminal that supports WiFi communication function. Optionally, the wireless communication terminal is at least one of, for example, a mobile phone, a wearable device, an Internet of Things device that supports WiFi communication function, a car with WiFi communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, but not limited thereto.

Specifically, the station device may be a terminal device or a network device with a wireless fidelity (WiFi) chip. Optionally, the station device may support multiple WLAN standards such as 802.11ax, 802.11be, 802.11ac, 802.11n, 802.11g, 802.11b, 802.11a, 802.11bf, 802.11bn, and support the next generation 802.11 protocol, but is not limited thereto.

In some embodiments, the access point device can be an access point for a mobile terminal to enter a wired network. AP is equivalent to a bridge connecting a wired network and a wireless network. Its main function is to connect various wireless network clients together and then connect the wireless network to the Ethernet. Specifically, the AP can be a terminal device or a network device with a wireless fidelity chip. Optionally, the AP can support multiple WLAN standards such as 802.11ax, 802.11be, 802.11ac, 802.11n, 802.11g, 802.11b and 802.11a, 802.11bf, 802.11bn, and support the next generation 802.11 protocol, but is not limited to this.

Optionally, in embodiments of the present disclosure, AP and STA may be devices supporting multiple connections, for example, they may be respectively represented as a multi-link access point device (AP MLD) and a multi-link station device (Non-AP MLD); AP MLD may represent an access point supporting multi-link communication functions, and non-AP MLD may represent a station supporting multi-link communication functions.

It can be understood that the communication system described in embodiments of the present disclosure is for the purpose of more clearly illustrating the technical solution of embodiments of the present disclosure, and does not constitute a limitation on the technical solution provided in embodiments of the present disclosure. Those skilled in the art can know that with the evolution of the system architecture and the emergence of new business scenarios, the technical solution provided in embodiments of the present disclosure is also applicable to similar technical problems.

The following embodiments of the present disclosure may be applied to the communication system 100 shown in FIG. 1, or part of the subject, but are not limited thereto. The subjects shown in FIG. 1 are examples, and the communication system may include all or part of the subjects in FIG. 1, or may include other subjects other than FIG. 1. The number and form of the subjects are arbitrary. The subjects may be physical or virtual. The connection relationship between the subjects is an example, and the subjects may be connected or disconnected. The connection may be in any manner, may be a direct connection or an indirect connection, and may be a wired connection or a wireless connection.

Embodiments of the present disclosure can be applied to a wireless local area network (WLAN), such as a local area network using the 802.11 series of protocols. In a WLAN, a basic service set (BSS) is a basic component of a WLAN. A BSS network is composed of station devices with certain associations within a specific coverage area. One case of association is that stations communicate directly with each other in an ad hoc network, which is called an independent BSS (IBSS). Another more common case is that there is only one central station in the BSS network that is dedicated to managing the BSS, which is called an access point device, and all other STAs in the network are associated with it. Other stations in the BSS network that are not central stations are called terminals, also called non-AP STAs, and terminals and non-AP STAs are collectively referred to as STAs. When describing STAs, there is no need to distinguish between APs and non-AP STAs. In the same BSS network, due to distance, transmission power, and the like, a STA cannot detect other STAs that are far away from it, and the two are hidden nodes of each other. As shown in the figure, AP1 and STA1 constitute BSS1, and AP2 and STA2 constitute BSS2; if the coverage of two or more BSSs overlap, an Overlapping Basic Service Sets (BSS, OBSS) is formed. As shown in Figure 1, BSS1 and BSS2 overlap to form OBSS.

FIG. 2 is an interactive schematic diagram of a low latency service transmission method according to embodiments of the present disclosure. As shown in FIG. 2, the method includes the followings.

In Step 201, a first transmission power of a first frame is determined; where the first frame indicates that the first device transmits a low latency service within a TXOP corresponding to a second device; and the first device and the second device are in an OBSS.

The first transmission power is greater than the reference transmission power; the reference transmission power includes: the second transmission power of the second device transmitting non-low latency services, or a third transmission power, in a last transmission of the first frame, of the first device.

In UHR, low latency service transmission is one of the research focuses. In the low latency transmission scenario, the real-time data traffic of more applications has strict latency requirements. For example, the average latency or maximum latency is on the order of a few milliseconds to tens of milliseconds, and the applications require real-time data traffic to have extremely small jitter and strong reliability.

In OBSS, when the first device (which may be an AP or a STA, such as AP1 or STA1 in FIG. 1) senses that the OBSS is in a busy state; for example, the second device (which may be an AP or a STA, such as AP2 or STA2 in FIG. 1) acts as a TXOP holder or TXOP responder of a transmission opportunity (TXOP) and transmits a non-low latency service to its communication counterpart, and the first device senses that the OBSS is in a busy state, the first device sets its network allocation vector (NAV) duration to the foregoing TXOP duration, and does not access the channel during this duration. In embodiments of the present disclosure, in order to ensure the communication of low latency services, within the TXOP corresponding to the second device, if the first device has a low latency service to be transmitted, the first device transmits a first frame to indicate that it will transmit a low latency service within the TXOP corresponding to the second device.

In the process of transmitting a first frame, the first device first determines a first transmission power of the first frame, and the value of the first transmission power is greater than a reference transmission power; the reference transmission power includes: the second transmission power of the second device for transmitting non-low latency services, or a third transmission power, in a last transmission of the first frame, of the first device.

The reference transmission power is the second transmission power of the second device for transmitting non-low latency services, then the first device subsequently transmits the first frame with the first transmission power, or subsequently continues to transmit the data frame of the low latency service with the first transmission power to avoid the co-channel interference with the second device. Specifically, with the rapid increase of wireless devices and applications, more and more wireless local area networks are deployed in dense environments composed of multiple OBSSs, and wireless communication devices with different protocol standards exist in limited environments. The high-density deployment of WLANs will inevitably lead to overlapping areas of adjacent BSSs. In order to avoid interference, the APs in adjacent BSSs are to operate on different frequency bands, but this requirement is usually not met due to limited available frequency band resources. When multiple unrelated BSSs operating in the same frequency band or with partial frequency band overlap are close enough to receive each other's transmission information, the AP or STA in one BSS will prevent the AP or STA in other BSSs from transmitting information, which forms the problem of co-channel interference in the OBSS network. The co-channel interference will seriously affect the network performance and may even cause the network to paralyze. Therefore, in order to avoid co-channel interference with the second device, the first transmission power is set higher than the second transmission power of the second device for transmitting non-low latency services, so as to ensure the low latency service transmissions of the first device.

For example, the first device can detect that the second device is transmitting a non-low latency service, such as the following cases 1 to 3.

In case 1, AP1 (the first device, i.e., the transmitter that will subsequently transmit low latency service data) and STA1 (the third device, i.e., the receiver that will subsequently receive low latency service data) can both detect.

In case 2, AP1 (first device) can detect, STA1 (third device) cannot detect, and AP1 has downlink low latency service transmission.

In case 3, AP1 (the third device) cannot detect, STA1 (the first device) can detect, and STA1 has an uplink low latency service.

In the case where the first device is able to detect that the second device is transmitting a non-low latency service, the first device receives the physical layer protocol data unit (PPDU) of the non-low latency service transmitted by the first and second devices. In other words, for the first device, the PPDU is an OBSS PPDU. After the first device receives the OBSS PPDU, it can calculate the transmission power of the OBSS PPDU according to the value of the received signal strength indication (RSSI) of the received OBSS PPDU. The specific calculation method can adopt the calculation method in the existing communication protocol, which will not be repeated here.

The reference transmission power may also be the third transmission power of the first device for transmitting the first frame last time. For example, the first device (at least one of AP1 and STA1 in FIG. 1) cannot detect that the second device is transmitting a non-low latency service, such as the following cases 4 to 6.

In case 4, neither AP1 (first device) nor STA1 (third device) can detect.

In case 5, AP1 (first device) cannot detect, STA1 (third device) can detect, and AP1 has downlink low latency service transmission.

In case 6, AP1 (third device) can detect, STA1 (first device) cannot detect, and STA1 has an uplink low latency service.

In the case where the first device cannot detect that the second device is transmitting a non-low latency service, it cannot receive the OBSS PPDU, and therefore cannot determine the second transmission power. In this way, within the TXOP corresponding to the second device, when there is a low latency service to be transmitted, the first device first transmits the first frame once, and the transmission power of this time is the third transmission power. After transmitting the first frame this time, if the confirmation message frame of the third device for the feedback of the first frame is not received, or the transmission power of the received confirmation message frame (hereinafter referred to as the fourth transmission power) is higher than the third transmission power, it can be determined that there is a hidden node in the OBSS where the first device is located, and the working power of the hidden node may be the same as or very close to the third transmission power. Accordingly, in order to avoid the co-channel interference caused by the hidden node, the first device increases the transmission power of the first frame and increases the third transmission power to the first transmission power to avoid the co-channel interference.

Optionally, in embodiments of the present disclosure, the first frame includes a request to send (RTS) frame or a low latency indication (Low Latency Indication, LLI) frame.

Optionally, the first transmission power may be obtained by adding ndB to the reference transmission power. For example, when n is 3, the power is increased to twice the original power.

In Step 202, the first frame is transmitted.

The first device transmits a first frame with a first transmission power to indicate that it will transmit a low latency service within the TXOP corresponding to the second device; accordingly, the first transmission power is used to avoid the co-channel interference problem in the OBSS to ensure the low latency service transmission.

In Step 203, the low latency service is transmitted with the first transmission power.

Similarly, the first device transmits data frames of the low latency service with the first transmission power, avoids the co-channel interference problem in the OBSS through the first transmission power, and ensures the low latency service transmission.

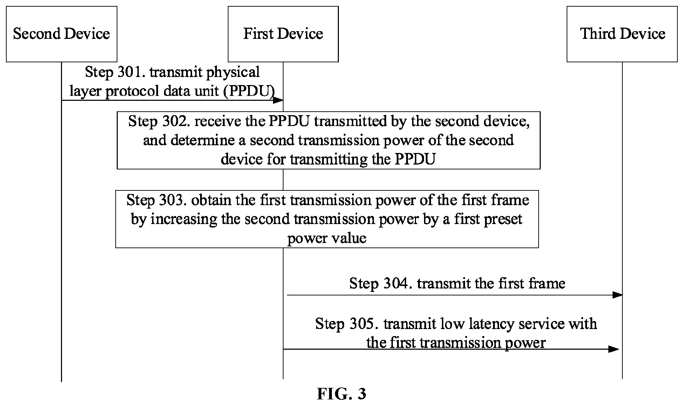

In some embodiments, as shown in FIG. 3, step 202 includes step 302 and step 303; optionally, before step 302, step 301 is also included, as shown in FIG. 3.

In Step 301, the second device transmits a PPDU.

For example, AP2 or STA2 in FIG. 1, as a TXOP holder or TXOP responder of a TXOP, transmits a non-low latency service with its communication counterpart and transmits a PPDU; and for the first device, the PPDU is an OBSS PPDU.

In Step 302, the first device receives the PPDU transmitted by the second device, and determines a second transmission power at which the second device transmits the PPDU.

The first device can detect that the second device is transmitting a non-low latency service, such as the following cases 1 to 3.

In case 1, AP1 (the first device, i.e., the transmitter that will subsequently transmit low latency service data) and STA1 (the third device, i.e., the receiver that will subsequently receive low latency service data) can both detect.

In case 2, AP1 (first device) can detect, STA1 (third device) cannot detect, and AP1 has downlink low latency service transmission.

In case 3, AP1 (the third device) cannot detect, STA1 (the first device) can detect, and STA1 has an uplink low latency service.

After the first device receives the OBSS PPDU, it can calculate the transmission power of the OBSS PPDU according to the value of the received signal strength indication (RSSI) of the received OBSS PPDU. The specific calculation method can adopt the calculation method in the existing communication protocol, which will not be repeated here.

In Step 303, the first transmission power of the first frame is obtained by increasing the second transmission power by a first preset power value.

The first transmission power may be a reference transmission power plus a first preset power value. For example, when the first preset power value is 3 dB, the power is increased to twice the original value.

In Step 304, the first frame is transmitted.

In Step 305, the low latency services is transmitted with the first transmission power.

In some embodiments, step 302 includes the following.

The PPDU transmitted by the second device is parsed.

It is determined, according to a BSS color identifier of the PPDU, that the PPDU is a data frame transmitted by an OBSS of the first device; and/or determined, according to a target identifier bit of the PPDU, that the PPDU is a data frame of a low latency service.

The first device parses the BSS color in the physical layer preamble (PHY preamble) of the PPDU transmitted by the second device, and determines that it is a data frame transmitted by the OBSS where the first device is located according to the BSS color. In addition, the PPDU may carry a target identifier bit to identify that the transmission is a non-low latency service, and specifically, a bit in the PHY preamble or a bit in the media access control layer (Media Access Control, MAC) frame header can be used as the target identifier bit.

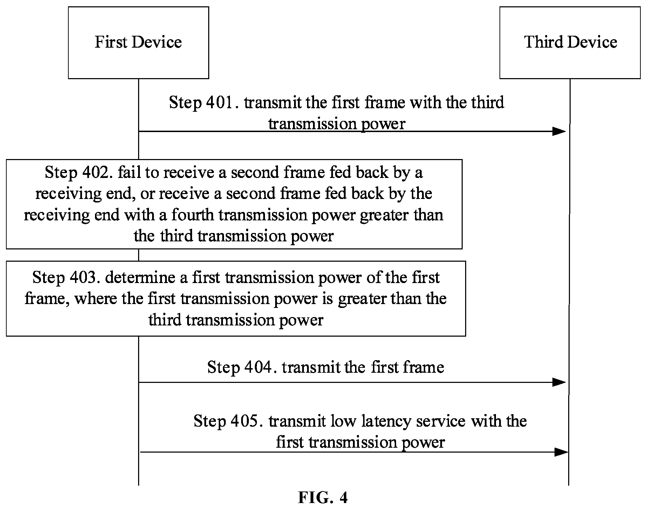

In some embodiments, as shown in FIG. 4, before step 202, steps 401 and 402 are also included, as shown in FIG. 3.

In Step 401, a first device transmits a first frame with a third transmission power.

The first device (at least one of AP1 and STA1 in FIG. 1) cannot detect that the second device is transmitting a non-low latency service, such as the following cases 4 to 6.

In case 4, neither AP1 (first device) nor STA1 (third device) can detect.

In case 5, AP1 (first device) cannot detect, STA1 (third device) can detect, and AP1 has downlink low latency service transmission.

In case 6, AP1 (third device) can detect, STA1 (first device) cannot detect, and STA1 has an uplink low latency service.

The first device cannot receive the OBSS PPDU, so it cannot determine the second transmission power. In this way, within the TXOP corresponding to the second device, when there is a low latency service that is to be transmitted, the first device first transmits the first frame once with the third transmission power. After transmitting the first frame this time, if the confirmation message frame of the third device for the feedback of the first frame is not received, or the transmission power of the received confirmation message frame (hereinafter referred to as the fourth transmission power) is higher than the third transmission power, it can be determined that there is a hidden node in the OBSS where the first device is located, and the working power of the hidden node may be the same as or very close to the third transmission power. Accordingly, in order to avoid the co-channel interference caused by the hidden node, the first device increases the transmission power of the first frame and increases the third transmission power to the first transmission power to avoid the co-channel interference.

In other words, the first device first tries to transmit the first frame with the third transmission power. If the confirmation message frame for the feedback of the third device for the first frame is not received, or the transmission power of the received confirmation message frame (hereinafter referred to as the fourth transmission power) is higher than the third transmission power, the transmission power can be increased by a certain amount each time, and the first frame is tried again until the confirmation message frame for the feedback of the third device for the first frame is received, and the transmission power of the received confirmation message frame is the same as the transmission power of the first frame transmitted this time. Accordingly, the first frame is transmitted successfully, and the transmission power of the first frame can be used as the transmission power for transmitting low latency services subsequently.

In step 402, if the second wireless frame fed back by the third device for the first frame is failed to receive, or the fourth transmission power of the second wireless frame fed back by the receiving end is greater than the third transmission power, the first device may determine that there is a hidden node and execute step 403.

The second wireless frame may be an ACK frame or a clear to send (CTS) frame. For example, if the first frame is an RTS frame, the second wireless frame may be a CTS frame; if the first frame is an LLI frame, the second wireless frame may be an ACK frame.

In Step 403, a first transmission power of the first frame is obtained by increasing the third transmission power by a first preset power value.

The first transmission power may be a reference transmission power plus a first preset power value. For example, when the first preset power value is 3 dB, the power is increased to twice the original value.

The third transmission power is increased by the first preset power value, and the first frame is continuously transmitted with the increased power until a second wireless frame is received as feedback from the third device for the first frame, and the transmission power of the received second wireless frame is the same as the transmission power of the first frame transmitted this time, then it can be determined that the transmission power of the first frame transmitted this time is feasible, the transmission power is confirmed as the first transmission power, and step 404 is executed.

In Step 404, the first frame is transmitted.

In Step 405, low latency services are transmitted with the first transmission power.

In some embodiments, before transmitting the first frame, the method includes:
updating a network allocation vector (NAV) of the first device to an idle state.

Before the first device transmits the first frame, the NAV is updated to an idle state at the MAC layer to facilitate the first device to access the channel to transmit the first frame.

In some embodiments, after determining the first transmission power of the first frame, the method includes:
broadcasting, by the access point device, a third wireless frame, where the third wireless frame carries the first transmission power, where the first device includes an access point device.

The third wireless frame may be a beacon frame, a probe response frame or a (Re) association response frame.

When the access point device broadcasts in the third wireless frame that it is in the OBSS TXOP, it is to transmit the transmission power value of the low latency service, so that other devices in the OBSS can avoid the first transmission power when working.

In some embodiments, the names of information, and the like are not limited to the names recorded in embodiments, and terms such as "information", "message", "signal", "signaling", "report", "configuration", "indication", "instruction", "command", "channel", "parameter", "domain", "field", "symbol", "codepoint", "bit", "data", "program", and "chip" can be used interchangeably.

In some embodiments, terms such as "moment", "time point", "time", and "time position" can be interchangeable, and terms such as "duration", "period", "time window", "window", and "time" can be interchangeable.

In some embodiments, terms such as wireless access scheme, waveform, and the like may be used interchangeably.

In some embodiments, terms such as "certain", "preset", "set", "indicated", "some", "any", and "first" can be interchangeable, and "specific A", "preset A", "set A", "indicated A", "some A", "any A", and "first A" can be interpreted as A pre-defined in a protocol, and the like, or as A obtained through setting, configuration, or indication, and the like, and can also be interpreted as specific A, some A, any A, or first A, and the like, but is not limited to this.

In some embodiments, the determination or judgment can be performed by a value represented by 1 bit (0 or 1), by a true or false value (Boolean value) represented by true or false, or by comparison of numerical values (for example, comparison with a predetermined value), but is not limited to this.

In some embodiments, "not expecting to receive" can be interpreted as not receiving on time domain resources and/or frequency domain resources, or as not performing subsequent processing on the data after receiving the data; "not expecting to send/transmit" can be interpreted as not transmitting, or as transmitting but not expecting the recipient to respond to the transmitted content.

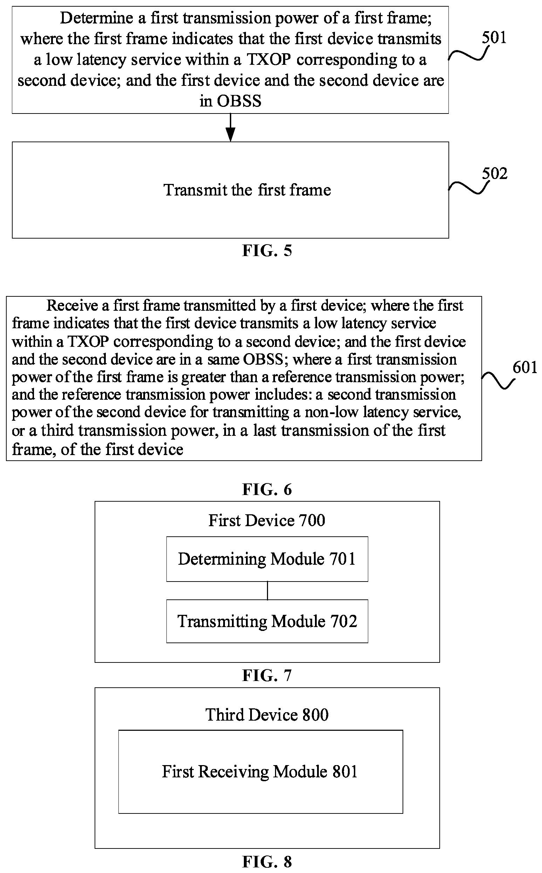

FIG. 5 is a first flow chart of a low latency service transmission method according to embodiments of the present disclosure.

As shown in FIG. 5, the foregoing method may be applied to a first device, and the foregoing method includes the followings.

In Step 501, a first transmission power of a first frame is determined; where the first frame indicates that the first device transmits a low latency service within a TXOP corresponding to a second device; and the first device and the second device are in OBSS.

The first transmission power is greater than a reference transmission power; the reference transmission power includes: a second transmission power of the second device transmitting a non-low latency service, or a third transmission power, in a last transmission of the first frame, of the first device.

In Step 502, the first frame is transmitted.

Optionally, in embodiments of the present disclosure, determining the first transmission power of the first frame includes the followings.

In Step 503, the PPDU transmitted by the second device is received, and a second transmission power of the second device for transmitting the PPDU is determined.

In Step 504, the first transmission power of the first frame is obtained by increasing the second transmission power by a first preset power value.

Optionally, in embodiments of the present disclosure, step 503 includes the followings.

In Step 5031, the PPDU transmitted by the second device is parsed.

In Step 5032, it is determined, based on the BSS color identifier of the PPDU, that the PPDU is a data frame transmitted by the OBSS of the first device; and/or, in Step 5033, it is determined, based on the target identifier of the PPDU, that the PPDU is a data frame of a low latency service.

Optionally, in embodiments of the present disclosure, before determining the first transmission power of the first frame, the method includes the followings.

In Step 505, the first frame is transmitted with the third transmission power.

In Step 506, the second wireless frame fed back by the receiving end is failed to receive, or, in Step 506, the fourth transmission power of the second wireless frame fed back by the receiving end is greater than the third transmission power.

Optionally, in embodiments of the present disclosure, after transmitting the first frame, the method includes the following.

In Step 507, the low latency service is transmitted with the first transmission power.

Optionally, in embodiments of the present disclosure, before transmitting the first frame, the method includes the following.

The NAV of the first device is updated to an idle state.

Optionally, in embodiments of the present disclosure, after determining the first transmission power of the first frame, the method includes the following.

In Step 508, the access point device broadcasts a third wireless frame, where the third wireless frame carries the first transmission power, where the first device includes an access point device.

Optionally, in embodiments of the present disclosure, the first frame includes a request to send (RTS) frame or a low latency indication (LLI) frame.

The low latency service transmission method involved in embodiments of the present disclosure may include at least one of the foregoing steps and embodiments. For example, step 501 can be implemented as an independent embodiment, step 502 can be implemented as an independent embodiment, step 503 can be implemented as an independent embodiment, step 505 can be implemented as an independent embodiment, step 507 can be implemented as an independent embodiment, and step 508 can be implemented as an independent embodiment; the combination of step 501 and step 502 can be implemented as an independent embodiment, the combination of step 503 and step 504 can be implemented as an independent embodiment, and the combination of step 505 and step 506 can be implemented as an independent embodiment, but is not limited thereto.

In some embodiments, reference may be made to other optional implementations recorded before or after the description corresponding to FIG. 5.

FIG. 6 is a second flow chart of a low latency service transmission method according to embodiments of the present disclosure.

As shown in FIG. 6, the foregoing method may be applied to a third device, and the foregoing method includes the followings.

In Step 601, a first frame transmitted by a first device is received.

The first frame indicates that the first device transmits a low latency service within a transmission opportunity (TXOP) corresponding to a second device; and the first device and the second device are in a same overlapping basic service set (OBSS).

A first transmission power of the first frame is greater than a reference transmission power; and the reference transmission power includes: a second transmission power of the second device for transmitting a non-low latency service, or a third transmission power, in a last transmission of the first frame, of the first device.

Optionally, in embodiments of the present disclosure, before receiving the first frame transmitted by the first device, the method includes the followings.

In Step 602, the first frame transmitted by the first device is received with the third transmission power.

In Step 603, a second wireless frame is transmitted to the first device with a fourth transmission power; where the fourth transmission power is greater than the third transmission power.

Optionally, in embodiments of the present disclosure, after receiving the first frame transmitted by the first device, the method includes the following.

In Step 604, a low latency service transmitted by the first device is received with the first transmission power.

Optionally, in embodiments of the present disclosure, the first frame includes a request to send (RTS) frame or a low latency indication (LLI) frame.

The low latency service transmission method involved in embodiments of the present disclosure may include at least one of the foregoing steps and embodiments. For example, step 601 may be implemented as an independent embodiment, step 602 may be implemented as an independent embodiment, step 603 may be implemented as an independent embodiment, and step 604 may be implemented as an independent embodiment; the combination of step 601 and step 602 may be implemented as an independent embodiment, and the combination of step 602 and step 603 may be implemented as an independent embodiment, but is not limited thereto.

In some embodiments, reference may be made to other optional implementations recorded before or after the description corresponding to FIG. 6.

Embodiments of the present disclosure also provide a device for implementing any of the foregoing methods, for example, a device is provided, the foregoing device includes a unit or module for implementing each step performed by the terminal in any of the foregoing methods. For example, another device is also provided, including a unit or module for implementing each step performed by a network device (such as an access network device, a core network function node, a core network device, and the like) in any of the foregoing methods.

It should be understood that the division of the units or modules in the foregoing device is only a division of logical functions, and in actual implementation, they can be fully or partially integrated into one physical entity, or they can be physically separated. In addition, the units or modules in the device can be implemented in the form of a processor calling software: for example, the device includes a processor, the processor is connected to a memory, and instructions are stored in the memory. The processor calls the instructions stored in the memory to implement any of the foregoing methods or implement the functions of the units or modules of the foregoing device, where the processor is, for example, a general-purpose processor, such as a central processing unit (CPU) or a microprocessor, and the memory is a memory inside the device or a memory outside the device. Alternatively, the units or modules in the device can be implemented in the form of hardware circuits, and the functions of some or all of the units or modules can be realized by designing the hardware circuits. The foregoing hardware circuits can be understood as one or more processors; for example, in one implementation, the foregoing hardware circuit is an application-specific integrated circuit (ASIC), and the functions of some or all of the foregoing units or modules are realized by designing the logical relationship of the components in the circuit; for example, in another implementation, the foregoing hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the foregoing units or modules. All units or modules of the foregoing devices can be realized in the form of a processor calling software, or in the form of a hardware circuit, or in part by a processor calling software, and the rest by a hardware circuit.

In embodiments of the present disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP), and the like; in another implementation, the processor may implement certain functions through the logical relationship of the hardware circuit, and the logical relationship of the foregoing hardware circuit may be fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the foregoing units or modules. In addition, it may also be a hardware circuit designed for artificial intelligence, which may be understood as an ASIC, such as a neural network processing unit (NPU), a tensor processing unit (TPU), a deep learning processing unit (DPU), and the like.

FIG. 7 is a structure schematic diagram of a first device according to embodiments of the present disclosure. As shown in FIG. 7, the first device 700 may include at least one of a determining module 701, a transmitting module 702, and the like.

In some embodiments, the determining module 701 is configured to determine a first transmission power of a first frame; where the first frame indicates that the first device transmits a low latency service within a TXOP corresponding to a second device; and the first device and the second device are in OBSS.

The first transmission power is greater than the reference transmission power; the reference transmission power includes: the second transmission power of the second device transmitting non-low latency services, or a third transmission power, in a last transmission of the first frame, of the first device.

The transmitting module 702 is configured to transmit the first frame.

Optionally, the determining module 701 is used to perform at least one of the communication steps (such as step 201, step 501, step 302, step 303, step 403, but not limited thereto) executed by the first device in any of the foregoing methods, which will not be described in detail here. The transmitting module 702 is used to perform at least one of the communication steps (such as step 202, step 203, step 304, step 305, step 401, step 402, step 404, step 405, step 502, step 505, step 507, step 508, but not limited thereto) executed by the first device in any of the foregoing methods, which will not be described in detail here.

FIG. 8 is a structure schematic diagram of a third device provided in embodiments of the present disclosure. As shown in FIG. 8, the third device 800 may include: a first receiving module 801.

In some embodiments, the first receiving module 801 is configured to receive a first frame transmitted by a first device.

The first frame indicates that the first device transmits a low latency service within the TXOP corresponding to the second device; the first device and the second device are in the same OBSS.

The first transmission power of the first frame is greater than the reference transmission power; the reference transmission power includes: the second transmission power of the second device transmitting non-low latency services, or a third transmission power, in a last transmission of the first frame, of the first device.

Optionally, the first receiving module 801 is used to perform at least one of the communication steps (such as step 601, but not limited thereto) performed by the third device in any of the foregoing methods, which will not be described in detail here.

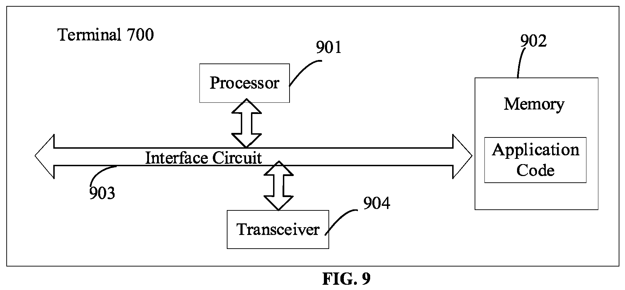

FIG. 9 is a structure schematic diagram of a terminal 900 (e.g., user device, and the like) provided in embodiments of the present disclosure. The terminal 900 may be a chip, a chip system, or a processor, and the like that supports a network device to implement any of the foregoing methods, or may be a chip, a chip system, or a processor, and the like that supports a terminal to implement any of the foregoing methods. The terminal 900 may be used to implement the method described in the foregoing method embodiment, and the details can refer to the description in the foregoing method embodiment.

As shown in FIG. 9, the terminal 900 includes one or more processors 901. The processor 901 may be a general-purpose processor or a dedicated processor, for example, a baseband processor or a central processing unit. The baseband processor may be configured to process the communication protocol and the communication data, and the central processing unit may be configured to control the communication device (such as a base station, a baseband chip, a terminal device, a terminal device chip, a DU or a CU, and the like), execute a program, and process the data of the program. The terminal 900 is used to perform any of the foregoing methods.

In some embodiments, the terminal 900 further includes one or more memories 902 for storing instructions. Optionally, all or part of the memory 902 may also be outside the terminal 900.

In some embodiments, the terminal 900 further includes one or more transceivers 904. When the terminal 900 includes one or more transceivers 904, the transceiver 904 performs at least one of the communication steps such as transmitting and/or receiving in the foregoing method (for example, step 202, step 203, step 301, step 302, step 303, step 304, step 305, step 401, step 402, step 403, step 404, step 405, step 502, step 503, step 505, step 507, step 508, step 601, step 603, step 604, but not limited thereto), and the processor 901 performs at least one of the other steps (for example, step 201, step 303, step 501, step 5031, step 5032, step 504, step 506, step 603, but not limited thereto).

In some embodiments, the transceiver may include a receiver and/or a transmitter, and the receiver and the transmitter may be separate or integrated. Optionally, the terms such as transceiver, transceiver unit, transceiver circuit, and the like may be replaced with each other, the terms such as transmitter, transmission unit, transmission circuit, and the like may be replaced with each other, and the terms such as receiver, receiving unit, receiving circuit, and the like may be replaced with each other.

In some embodiments, the terminal 900 may include one or more interface circuits 903. Optionally, the interface circuit 903 is connected to the memory 902, and the interface circuit 903 may be used to receive signals from the memory 902 or other devices, and may be used to transmit signals to the memory 902 or other devices. For example, the interface circuit 903 may read instructions stored in the memory 902 and transmit the instructions to the processor 901.

The terminal 900 described in the foregoing embodiments may be a communication device such as a user device, but the scope of the terminal 900 described in the present disclosure is not limited thereto, and the structure of the terminal 900 may not be limited by FIG. 9. The communication device may be an independent device or may be part of a larger device. For example, the communication device may be: (1) an independent integrated circuit IC, or a chip, or a chip system or subsystem; (2) a collection of one or more ICs, optionally, the foregoing IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, and the like (6) others, and the like.

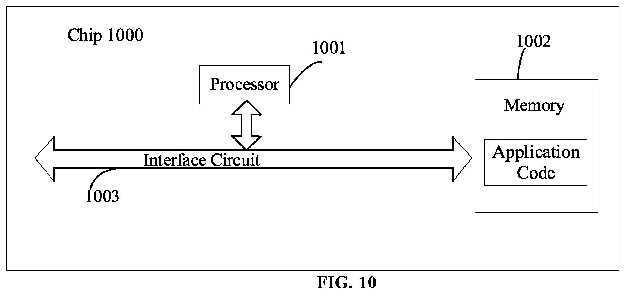

FIG. 10 is a structure schematic diagram of a chip 1000 provided in embodiments of the present disclosure. In the case where the terminal 900 may be a chip or a chip system, reference may be made to the structure schematic diagram of the chip 1000 shown in FIG. 10, but is not limited thereto.

The chip 1000 includes one or more processors 1001, and the chip 1000 is used to execute any of the foregoing methods.

In some embodiments, the chip 1000 further includes one or more interface circuit 1003. Optionally, the interface circuit 1003 is connected to the memory 1002. The interface circuit 1003 can be used to receive signals from the memory 1002 or other devices, and the interface circuit 1003 can be used to transmit signals to the memory 1002 or other devices. For example, the interface circuit 1003 can read the instructions stored in the memory 1002 and transmit the instructions to the processor 1001.

In some embodiments, the interface circuit 1003 performs at least one of the communication steps such as transmitting and/or receiving in the foregoing method, such as step 202, step 203, step 301, step 302, step 303, step 304, step 305, step 401, step 402, step 403, step 404, step 405, step 502, step 503, step 505, step 507, step 508, step 601, step 603, step 604, but not limited to this), and the processor 1001 performs at least one of the other steps (such as step 201, step 303, step 501, step 5031, step 5032, step 504, step 506, step 603, but not limited to this).

In some embodiments, terms such as interface circuit, interface, transceiver pin, and transceiver may be used interchangeably.

In some embodiments, the chip 1000 further includes one or more memories 1002 for storing instructions. Alternatively, all or part of the memory 1002 may be outside the chip 1000.

The present disclosure also provides a storage medium, on which instructions are stored, and when the instructions are run on the terminal 900, the terminal 900 executes any of the foregoing methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a temporary storage medium.

The present disclosure also provides a program product, and when the program product is executed by the terminal 900, enables the terminal 900 to execute any of the foregoing methods. Optionally, the program product is a computer program product.

The present disclosure also provides a computer program, which, when run on a computer, causes the computer to execute any one of the foregoing methods.

## Claims

1. A low latency service transmission method, applied to a first device, wherein the method comprises:
determining a first transmission power of a first frame; wherein the first frame indicates that the first device transmits a low latency service within a transmission opportunity TXOP corresponding to a second device; and the first device and the second device are in an overlapping basic service set OBSS;
wherein the first transmission power is greater than a reference transmission power; and the reference transmission power comprises: a second transmission power of the second device for transmitting a non-low latency service, or a third transmission power, in a last transmission of the first frame, of the first device; and
transmitting the first frame.

2. The low latency service transmission method according to claim 1, wherein determining the first transmission power of the first frame comprises:
receiving a physical layer protocol data unit PPDU transmitted by the second device, and determining the second transmission power of the second device for transmitting the PPDU; and
obtaining the first transmission power of the first frame by increasing the second transmission power by a first preset power value.

3. The low latency service transmission method according to claim 2, wherein receiving the PPDU transmitted by the second device comprises:
parsing the PPDU transmitted by the second device; and
determining, according to a BSS color identifier of the PPDU, that the PPDU is a data frame transmitted by an OBSS of the first device; and/or determining, according to a target identifier bit of the PPDU, that the PPDU is a data frame of the low latency service.

4. The low latency service transmission method according to claim 1, wherein before determining the first transmission power of the first frame, the method comprises:
transmitting the first frame with the third transmission power; and
failing to receive a second wireless frame fed back by a receiving end, or receiving a second wireless frame fed back by the receiving end with a fourth transmission power greater than the third transmission power.

5. The low latency service transmission method according to claim 1, wherein after transmitting the first frame, the method comprises:
transmitting the low latency service with the first transmission power.

6. The low latency service transmission method according to claim 1, wherein before transmitting the first frame, the method comprises:
updating a network allocation vector NAV of the first device to an idle state.

7. The low latency service transmission method according to claim 1, wherein after determining the first transmission power of the first frame, the method comprises:
broadcasting, by an access point device, a third wireless frame, wherein the first device comprises the access point device, and the third wireless frame carries the first transmission power.

8. The low latency service transmission method according to any one of claims 1 to 7, wherein the first frame comprises a request to send a request to send RTS frame or a low latency indication LLI frame.

9. A low latency service transmission method, applied to a third device, wherein the method comprises:
receiving a first frame transmitted by a first device;
wherein the first frame indicates that the first device transmits a low latency service within a transmission opportunity TXOP corresponding to a second device; and the first device and the second device are in a same overlapping basic service set OBSS;
wherein a first transmission power of the first frame is greater than a reference transmission power; and the reference transmission power comprises: a second transmission power of the second device for transmitting a non-low latency service, or a third transmission power, in a last transmission of the first frame, of the first device.

10. The low latency service transmission method according to claim 9, wherein before receiving the first frame transmitted by the first device, the method comprises:
receiving the first frame transmitted by the first device with the third transmission power; and
transmitting a second wireless frame to the first device with a fourth transmission power; wherein the fourth transmission power is greater than the third transmission power.

11. The low latency service transmission method according to claim 9, wherein after receiving the first frame transmitted by the first device, the method comprises:
receiving the low latency service transmitted by the first device with the first transmission power.

12. The low latency service transmission method according to any one of claims 9 to 11, wherein the first frame comprises a request to send a request to send RTS frame or a low latency indication LLI frame.

13. A communication device, wherein the communication device is a first device, wherein the first device comprises:
a determining module, configured to determine a first transmission power of a first frame; wherein the first frame indicates that the first device transmits a low latency service within transmission opportunity TXOP corresponding to a second device; and the first device and the second device are in an overlapping basic service set OBSS;
wherein the first transmission power is greater than a reference transmission power; and the reference transmission power comprises: a second transmission power of the second device for transmitting a non-low latency service, or a third transmission power, in a last transmission of the first frame, of the first device; and
a transmitting module, configured to transmit the first frame.

14. A communication device, wherein the communication device is a third device, wherein the third device comprises:
a first receiving module, configured to receive a first frame transmitted by a first device;
wherein the first frame indicates that the first device transmits a low latency service within a transmission opportunity TXOP corresponding to a second device; and the first device and the second device are in a same overlapping basic service set OBSS;
wherein a first transmission power of the first frame is greater than a reference transmission power; and the reference transmission power comprises: a second transmission power of the second device for transmitting a non-low latency service, or a third transmission power, in a last transmission of the first frame, of the first device.

15. A communication device, wherein the communication device is a first device, wherein the first device comprises:
one or more processors;
wherein the first device is configured to perform the low latency service transmission method according to any one of claims 1 to 8.

16. A communication device, wherein the communication device is a third device, wherein the third device comprises:
one or more processors;
wherein the third device is configured to perform the low latency service transmission method according to any one of claims 9 to 12.

17. A communication system, wherein the communication system comprises a first device and a third device; wherein the first device is configured to implement the low latency service transmission method according to any one of claims 1 to 8, and the third device is configured to implement the low latency service transmission method according to any one of claims 9 to 12.

18. A storage medium, wherein the storage medium stores instructions, and when the instructions are run on a communication device, thereby causing the communication device to perform the low latency service transmission method according to any one of claims 1 to 8, or to perform the low latency service transmission method according to any one of claims 9 to 12.
